Europäisches Patentamt

European Patent Office

Office européen des brevets

(11) Numéro de publication : **0 297 953 B1**

(12) **FASCICULE DE BREVET EUROPEEN**

(45) Date de publication du fascicule du brevet :
**13.05.92 Bulletin 92/20**

(21) Numéro de dépôt : **88401561.1**

(22) Date de dépôt : **22.06.88**

(51) Int. Cl.⁵ : **G05D 3/20**, B60Q 1/06, G05B 19/29

(54) **Dispositif électronique de commande d'un organe actionné par un moteur électrique.**

(30) Priorité : **30.06.87 FR 8709196**

(43) Date de publication de la demande :
**04.01.89 Bulletin 89/01**

(45) Mention de la délivrance du brevet :
**13.05.92 Bulletin 92/20**

(84) Etats contractants désignés :
**DE ES GB IT**

(56) Documents cités :
**FR-A- 1 162 183**
**FR-A- 2 469 745**
**GB-A- 2 062 015**

(73) Titulaire : **VALEO VISION**
**17, rue Henri Gautier**
**F-93012 Bobigny Cédex (FR)**

(72) Inventeur : **Boucheron, Jean-Louis**
**6, Hameau du Rougeau**
**F-77176 Savigny-le-Temple (FR)**
Inventeur : **Jendraszczak, Jean**
**11 Square Henri Matisse St.**
**Germain-les-Corbeil**
**F-91100 Corbeil-Essones (FR)**

(74) Mandataire : **Lemaire, Marc**
**VALEO Département Propriété Industrielle 30,**
**rue Blanqui**
**F-93406 Saint-Ouen (FR)**

## Description

L'invention concerne un dispositif électronique de commande d'un organe actionné par un moteur électrique pour amener ledit organe à une pluralité de positions distinctes au moyen d'un organe de commande tel qu'une molette.

Pour chaque position de l'organe de commande correspond une position et une seule de l'organe commandé. Habituellement, une telle commande est effectuée par des moyens électromécaniques qui deviennent compliqués lorsque le nombre de positions augmente. Voir par exemple le bouton sélecteur et l'inverseur du document FR-A-2469745.

La présente invention vise à assurer une telle commande par des moyens électroniques assurant une grande fiabilité et une construction économique, même pour un nombre élevé de positions.

A cet effet, le dispositif selon l'invention est caractérisé par le fait qu'il comprend un premier curseur entraine par l'organe de commande et coopérant avec une première pluralité de pistes conductrices discontinues reliées au plus et avec une piste de masse, un second curseur relié à l'organe asservi coopérant avec une seconde pluralité de pistes identiques aux précédentes et avec une piste supplémentaire reliée au plus pour la division en une zone étroite et une zone large des plages associées à chaque position du second curseur, les sorties des première et seconde pluralités de pistes reliées au plus étant envoyées à un comparateur recevant en outre une valeur constante et commandant un amplificateur opérationnel de puissance référencée à une tension moyenne, ledit amplificateur commandant le moteur.

Pour chaque position d'un curseur, les pistes en contact avec lui sont reliées à la masse alors que les pistes qui ne sont pas reliées au curseur sont au plus. On crée ainsi un code binaire sur chacune des sorties pour chaque position du curseur.

L'invention sera bien comprise à la lecture de la description suivante faite en se référant au dessin annexé dans lequel:

– la figure 1 représente un schéma d'un codeur de commande pour un dispositif correcteur de phare selon un exemple de réalisation de l'invention;

– la figure 2 est un schéma d'un codeur de position du moteur du même correcteur;

– la figure 3 est un schéma général de l'installation du correcteur; et

– la figure 4 est un schéma du dispositif correcteur.

L'invention est décrite en référence à un système correcteur de phares destiné à la commande du réglage de ceux-ci sur plusieurs positions distinctes associées à la position d'une molette de commande. L'exemple décrit un correcteur possédant huit positions distinctes.

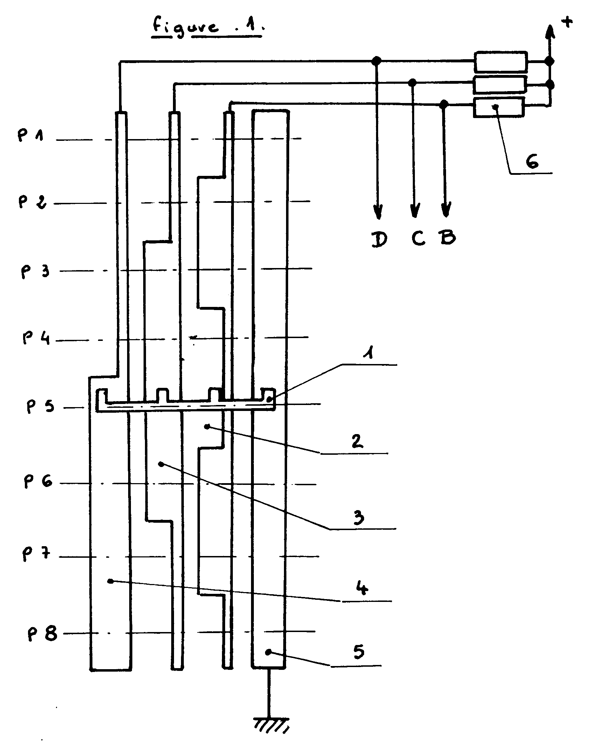

La figure 1 représente le codeur de position de référence de commande qui, dans le cas présent, comporte huit positions indexées baptisées P1 à P8.

Un curseur 1 est entrainé par un sélecteur, pouvant être une molette ou un curseur, sur un circuit imprimé sur lequel figurent des pistes conductrices 2, 3, 4 et 5.

Le curseur balaye l'ensemble des pistes 2, 3, 4, 5 et relie la masse reliée à la piste 5 aux parties conductrices des pistes 2, 3 ou 4.

Ainsi, pour chaque position indexée P1 à P8, on dispose sur les trois sorties B, C et D d'un code binaire différent et correspondant à la position du curseur 1.

La piste 2 correspond à la sortie B et représente les poids faibles. La piste 3 correspond à la sortie C. La piste 4 correspond à la sortie D et représente les poids forts.

Les fils B, C et D sont rappelés au + par des résistances 6.

Ainsi, et selon la représentation de la figure, la sortie B sera reliée au + puisque le curseur ne relie pas la piste 2 à la masse, alors que les sorties C et D seront reliées à la masse puisque le curseur 1 relie ces deux pistes à la piste 5 elle-même reliée à la masse.

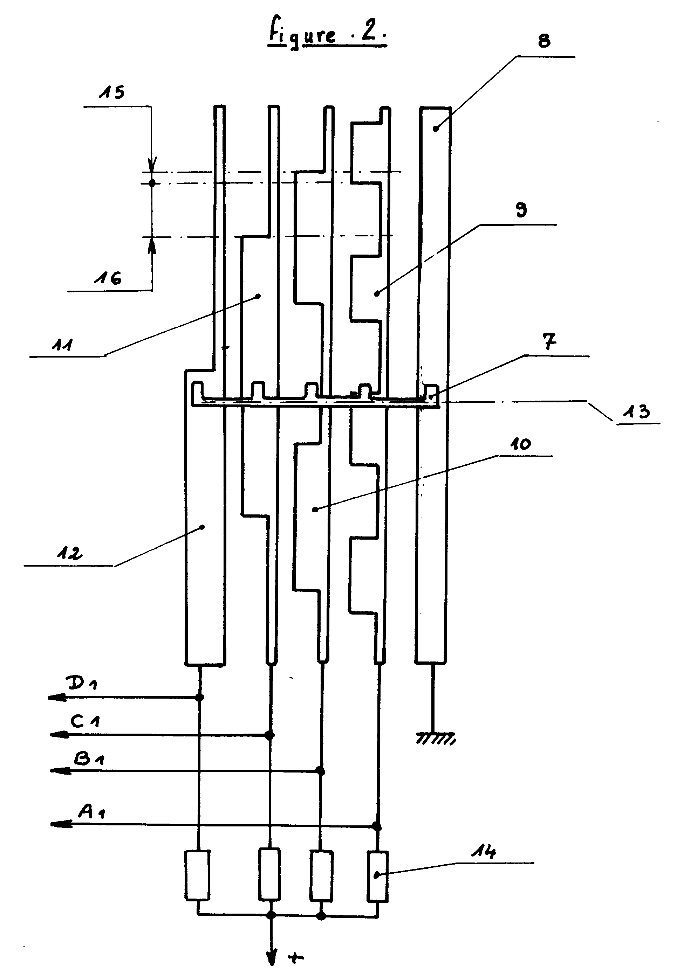

La figure 2 représente un codeur de position du moteur du même type que le précédent, dont le déplacement du curseur 7 est assuré et lié au dispositif mécanique du correcteur de phare par un entrainement symbolisé 13.

Ainsi les codes lus sur les sorties A1, B1, C1, D1 correspondent à des plages de positions distinctes du correcteur de phare.

De même que précédemment, les codes portés par les pistes 10, 11, 12 reliés respectivement aux sorties B1, C1 et D1 correspondent aux pistes B, C et D précédemment décrites.

Par contre, il existe une piste supplémentaire 9 et raccordée à la sortie A1, divisant chaque plage précédemment définie par un code correspondant aux trois pistes 10, 11, 12 en deux parties.

On remarquera que cette division n'est pas symétrique. Ainsi, sur la plage correspondant à la position P2 du codeur de consigne, il existe une division en deux zones 15 et 16 telle que la zone correspondant à la plage 15 est étroite alors que la zone correspondant à la plage 16 est large.

Ces deux plages définissent pour la première plage 15, une plage d'arrêt du correcteur qui correspondra à la position P2 et pour la seconde une plage de transition 16 sur laquelle le moteur ne sera pas stoppé jusqu'à ce qu'il atteigne une nouvelle plage d'arrêt.

On voit donc qu'afin d'obtenir une précision d'indexage de position, les plages d'arrêt seront de largeurs faibles et compatibles avec l'inertie du moteur et la vitesse de réaction de la chaine d'asservissement.

Comme précédemment, une piste 8 assure le retour à la masse, et les pistes de codage 9, 10, 11 et 12 sont reliées au + par une résistance de rappel 14.

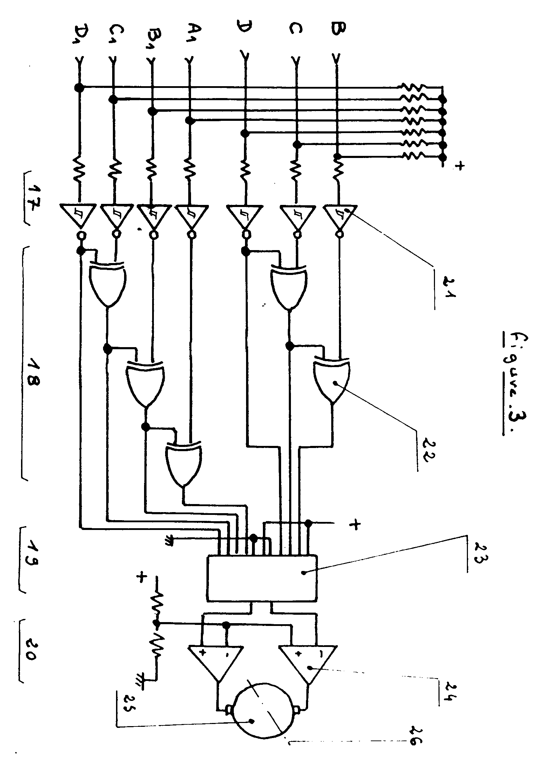

La figure 3 représente le schéma général de l'installation sur lequel figurent les entrées B, C, D du codeur de commande les entrées A1, B1, C1, D1 du codeur associé au moteur du correcteur 25 par une liaison symbolique 26.

Le schéma se décompose en quatre parties:
– des circuits de protection d'entrée 17 composés de réseaux de résistances de protection et de rappel au + et des triggers 21;
– un assemblage de portes 22 permettant de transformer le code binaire réfléchi transmis par les codeurs en un code binaire pur; cette partie 18 assure donc la transcodification d'un code à un autre;
– d'un comparateur 4 bits 23 effectuant la comparaison entre le code de référence position avec le code de position du correcteur. A1 sera comparé à une valeur constante A correspondant à la définition conduisant à l'arrêt sur les plages d'arrêt. Dans ces conditions, le moteur tournera dans un sens si A1, B1, C1, D1 est plus grand que A,B,C,D et dans l'autre si A1, B1, C1, D1 est plus petit que A,B,C,D.

A étant fixe, il ne peut y avoir qu'un seul cas d'égalité si B C D = B1 C1 D1. C'est celui ou A sera égal à A1 ce qui permettra de retrouver automatiquement la plage d'arrêt correspondant à la valeur de la consigne.

Ce circuit de comparaison 19 permet d'attaquer par ses sorties A > B ou A < B directement la commande d'un ampli opérationnel de puissance référencée à une tension moyenne 24. Cet étage de puissance 20 permet la commande du moteur 25.

Il va de soi que l'ensemble de ce circuit pourrait être réalisé différemment, par exemple par un circuit logique réalisant directement la fonction logique nécessaire liant les entrées A1, B1, C1, D1, B, C, D et les deux sorties de commande du moteur, ou directement par une mémoire ROM dont les entrées-adresses seraient raccordées aux fils d'entrée A1, B1, C1, D1, B, C, D et les sorties-données aux entrées des drivers de commande du moteur.

De même, les sorties du comparateur peuvent attaquer un pont de transistors pour la commande du moteur.

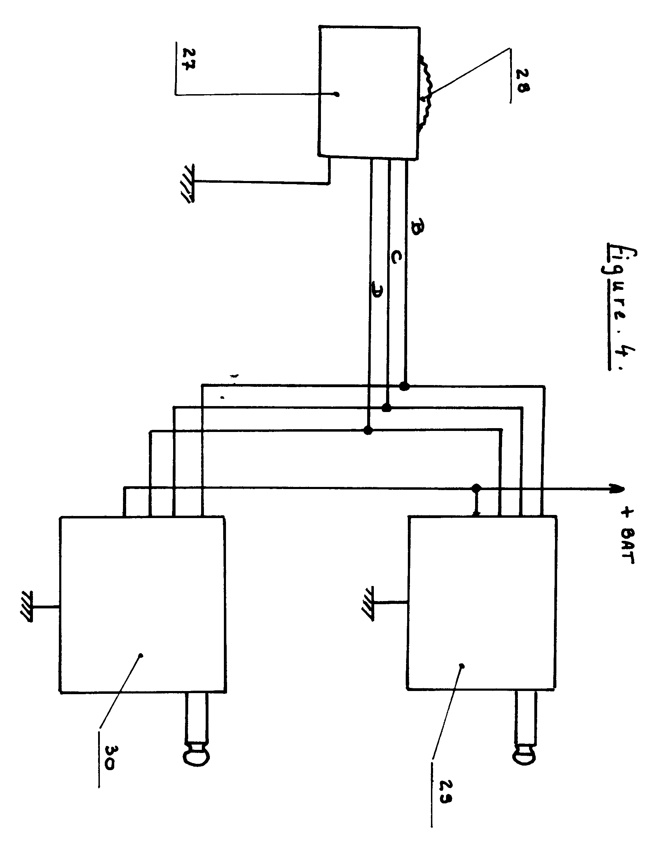

La figure 4 représente le schéma général du correcteur dans lequel on retrouve le codeur de commande dans un boitier 27 pouvant être entrainé par une molette 28, les deux, trois ou n fils de codage distribués sur les deux correcteurs droite et gauche 29 et 30.

Bien que l'exemple décrit concerne un correcteur à huit positions distinctes, il est possible de déterminer autant de positions que nécessaire sachant que, pour quatre positions ou moins, on devra disposer entre la molette de commande et les deux boitiers correcteurs de deux fils de codage B et C, que pour cinq à huit positions, il faudra trois fils de codage B, C et D (voir figure 4), que pour neuf à seize positions, il faudra quatre fils B, C, D et E, etc.

## Revendications

1. Dispositif électronique de commande d'un organe actionné par un moteur électrique (25) pour amener ledit organe à une pluralité de positions distinctes (P1,P2,...P8) au moyen d'un organe de commande tel qu'une mollette, caractérisé par le fait qu'il comprend un premier curseur (1) entraîné par l'organe de commande et coopérant avec une première pluralité de pistes conductrices (2,3,4) discontinues reliées au plus et avec une piste de masse (5), un second curseur (7) relié à l'organe asservi coopérant avec une seconde pluralité de pistes (8,10 ; 11,12) identiques aux précédentes et avec une piste supplémentaire (9) reliée au plus pour la division en une zone étroite (15) et une zone large (16) des plages associées à chaque position du second curseur (7), les sorties (B,C,D-A1,B1,D1,D1) des première et seconde pluralités de pistes reliées au plus étant envoyées à un comparateur (23) recevant en outre une valeur (A) constante et commandant un amplificateur opérationnel de puissance (24) référencée à une tension moyenne, ledit amplificateur (24) commandant le moteur (25).

2. Dispositif selon la revendication 1, caractérisé par le fait que ledit moteur (25) fait partie d'un correcteur de phare pour véhicule automobile.

3. Dispositif selon l'une des revendications 1 et 2, caractérisé par le fait que les sorties des pistes conductrices (2,3,4 - 9,10,11,12) sont reliées au plus par l'intermédiaire de résistances de rappel (6,14).

4. Dispositif selon la revendication 3, caractérisé en ce que, pour chaque position d'un curseur, les pistes en contact avec lui sont reliées à la masse, alors que les pistes qui ne sont pas reliées au curseur sont au plus, en sorte de créer un code binaire sur chacune des sorties pour chaque position du curseur.

5. Dispositif selon la revendication 3 ou 4, dans lequel le premier curseur (1) appartient à un codeur de commande, tandis que le second curseur (7) appartient à un codeur de position dudit moteur électrique (25), caractérisé en ce qu'il comporte des circuits de protection d'entrée (17) composés de réseaux de résistances de protection et de rappel au plus et des triggers (21), un assemblage de portes (22) permettant de transformer le code binaire réfléchi transmis par les codeurs en un code binaire pur et dudit comparateur (23) effectuant la comparaison entre le code de référence position avec la position du correcteur de phare.

## Patentansprüche

1. Elektronische Steuervorrichtung für ein durch einen Elektromotor (25) betriebenes Gerät zur Bewegung des genannten Geräts in eine Vielzahl unterschiedlicher Stellungen (P1, P2,...P8) mit Hilfe eines Steuerorgans wie zum Beispiel eines Rändelrades, **dadurch gekennzeichnet ,** daß sie einen ersten Schieber (1) enthält, der durch das Steuerorgan angetrieben wird und mit einer ersten Vielzahl von mit dem Pluspol verbundenen diskontinuierlichen Leiterbahnen (2, 3, 4) und mit einer Massebahn (5) zusammenwirkt, einen zweiten Schieber (7), der mit dem gesteuerten Organ verbunden ist und mit einer zweiten Vielzahl von Bahnen (8, 10; 10, 11) gleich den vorgenannten sowie mit einer zusätzlichen, mit dem Pluspol verbundenen Bahn (9) zusammenwirkt, um die Aufteilung in eine schmale Zone (15) und eine breite Zone (16) der mit jeder Stellung des zweiten Schiebers (7) einhergehenden Bereiche zu bewirken, wobei die Ausgänge (B, C, D-A1, B1, D1, D1) der ersten und zweiten Vielzahl mit dem Pluspol verbundener Bahnen einem Komparator (23) zugeleitet werden, der außerdem einen konstanten Wert (A) empfängt und einen Operationsverstärker mit einer auf eine mittlere Spannung bezogenen Leistung (24) ansteuert, wobei der genannte Verstärker (24) den Motor (25) antreibt.

2. Vorrichtung nach Anspruch 1, **dadurch gekennzeichnet ,** daß der genannte Motor (25) Teil eines Scheinwerfer-Reglers für Kraftfahrzeuge ist.

3. Vorrichtung nach einem der Ansprüche 1 und 2, **dadurch gekennzeichnet ,** daß die Ausgänge der Leiterbahnen (2, 3, 4 - 9, 10, 11, 12) über Rückstellwiderstände (6, 14) mit dem Pluspol verbunden sind.

4. Vorrichtung nach Anspruch 3, **dadurch gekennzeichnet ,** daß die Bahnen, die mit einem Schieber in Kontakt sind, für jede Stellung an Masse gelegt sind, während die nicht mit dem Schieber verbundenen Bahnen auf den Pluspol geführt sind, so daß an jedem Ausgang für jede Schieberstellung ein Binärcode entsteht.

5. Vorrichtung nach Anspruch 3 oder 4, wobei der erste Schieber (1) zu einem Steuercodierer gehört, während der zweite Schieber (7) zu einem Stellungscodierer für den genannten Elektromotor (25) gehört, **dadurch gekennzeichnet ,** daß sie Eingangsschutzschaltungen (17) enthält, die aus Netzen von Schutz- und Rückstellwiderständen am Pluspol und Triggervorrichtungen (21) bestehen, wobei eine Port-Einheit (22) die Umwandlung des durch die Codierer übermittelten reflektierten Binärcodes in einen reinen Binärcode gestattet und der genannte Komparator (23) den Vergleich zwischen dem Weg-Bezugscode und der Stellung des Scheinwerferreglers bewirkt.

## Claims

1. Electronic control apparatus, for a device actuated by an electric motor (25) for putting the said device into a plurality of distinct positions (P1, P2, ... P8) by means of a control member such as a finger wheel, characterised by the fact that it includes a first cursor (1) driven by the control member and cooperating with a first plurality of discontinuous conductive strips (2, 3, 4) connected to the positive supply, and with an earth strip (5), a second cursor (7) connected to the controlled device and cooperating with a second plurality of strips (8, 10; 11, 12) identical to the foregoing, and with a supplementary strip (9) connected to the positive supply, for division into a narrow zone (15) and a wide zone (16) of the strip contact area associated with each position of the second cursor (7), the outputs (B, C, D - A1, B1, D1, D1) of the first and second pluralities of strips connected to the positive supply being taken to a comparator (23), which also receives a constant value signal (A) and which controls an operational power amplifier (24) which is referenced to a mean voltage, with the said amplifier (24) controlling the motor (25).

2. Apparatus according to Claim 1, characterised by the fact that the said motor (25) is part of a headlamp adjuster for a motor vehicle.

3. Apparatus according to Claim 1 or Claim 2, characterised by the fact that the outputs of the conductive strips (2, 3, 4 - 9, 10, 11, 12) are connected to the positive supply through bias resistors (6, 14).

4. Apparatus according to Claim 3, characterised in that, for each position of a cursor, the strips in contact with it are connected to earth, while the strips that are not connected to the cursor are connected to the positive supply, so as to generate a binary code on each of the outputs for each position of the cursor.

5. Apparatus according to Claim 3 or Claim 4, wherein the first cursor (1) is part of a control coder, while the second cursor (7) is part of a position coder for the electric motor (25), characterised in that it includes input protection circuits (17) comprising networks of protective biasing resistors connected to the positive supply, together with triggers (21) and an assembly comprising gates (22) and the said comparator (23), such that the gates convert the reflected binary code transmitted by the coders into a pure binary code, with the comparator effecting the comparison between the reference position code and the position of the headlamp adjuster.

figure . 1 .

figure . 2 .

figure.3.

Figure. 4.